# EUROPÄISCHE PATENTSCHRIFT

(11) **EP 0 742 766 B1**
(45) Veröffentlichungstag und Bekanntmachung des Hinweises auf die Patenterteilung: **27.05.1998**
(21) Anmeldenummer: 95906313.2
(22) Anmeldetag: 07.01.1995
(51) Int. Cl.: B60T 8/40, B60T 8/44, B60T 8/48, B60T 11/224, B60T 13/74, H02P 7/05, F04B 5/00

(54) **HYDRAULISCHE BREMSANLAGE MIT SCHLUPFREGELUNG**
HYDRAULIC BRAKE SYSTEM WITH SLIP CONTROL
SYSTEME DE FREINAGE HYDRAULIQUE A REGULATION ANTIPATINAGE

(30) Priorität: 20.01.1994 DE 4401524
(43) Veröffentlichungstag der Anmeldung: 20.11.1996
(73) Patentinhaber: ITT Automotive Europe GmbH, 60488 Frankfurt (DE)
(72) Erfinder: FEIGEL, Hans-Jörg, D-61191 Rosbach (DE); NEUMANN, Ulrich, D-64380 Rossdorf (DE); SCHIEL, Lothar, D-65719 Hofheim (DE)
(86) Internationale Anmeldenummer: EP9500055
(87) Internationale Veröffentlichungsnummer: WO9519901

(56) Entgegenhaltungen:
- EP-A- 0 317 182
- EP-A- 0 317 304
- EP-A- 0 379 329
- CH-A- 222 024
- DE-A- 4 310 061
- GB-A- 2 174 161
- US-A- 5 161 865
- PATENT ABSTRACTS OF JAPAN vol. 9, no. 46 (M-360) (1769) 27. Februar 1985 & JP,A,59 186 755 (MAZDA) 23. Oktober 1984

## Beschreibung

Die Erfindung betrifft eine hydraulische Bremsanlage mit Schlupfregelung nach den Oberbegriffen der Ansprüche 1 und 8.

Bei der in der nicht vorveröffentlichten DE-A-43 10 061 beschriebenen Bremsanlage hat es sich gezeigt, daß bei schneller Betätigung der Bremse die Anforderung an den Bremskraftverstärker zur Bereitstellung eines möglichst großen Volumenstroms in der anfänglichen Betätigungsphase noch nicht in vollem Umfang befriedigend ist, wobei in einer weiteren Betätigungsphase ein hoher Druck bei kleinem Volumenstrom wünschenswert ist.

Aus der gattungsbildenden EP-A-0379329 ist bereits eine hydraulische Bremsanlage mit Schlupfregelung bekannt geworden, die einen Bremsdruckgeber aufweist, der zur Betätigung eines Arbeitskolbens mit einem Verstärkerkolben versehen ist. Der Verstärkerkolben ist mittels einer elektrisch ansteuerbaren Hilfsdruckquelle mit Servodruck beaufschlagt, wozu ein Sensor zur Erfassung der Relativbewegung zwischen einer Druckstange und dem Verstärkerkolben vorgesehen ist, der über eine Steuer- und Regelelektronik Elektromagnetventile zur Ansteuerung der Hilfsdruckquelle betätigt.

Damit liegt der Erfindung die Aufgabe zugrunde, eine Bremsanlage der eingangs genannten Gattung derart weiter zu entwickeln, daß durch den Bremskraftverstärker in der schnellen Anbremsphase eine größtmögliche Volumenaufnahme den Radbremsen zur Verfügung gestellt wird.

Diese Aufgabe wird erfindungsgemäß durch die kennzeichnenden Merkmale des Patentanspruchs 1 gelöst. Ein alternativer Lösungsvorschlag des Problems geht aus den kennzeichnenden Merkmalen des Patentanspruchs 8 hervor, so daß entweder durch die Verwendung einer elektrisch betätigbaren Füllstufe oder eines als Stellantrieb wirksamen Reluktanzmotors mit zwei unterschiedlich steilen Drehzahl-Drehmoment Kennlinien der gewünschte Volumenbedarf während der Anbremsung realisiert werden kann.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand einer Zeichnung näher dargestellt und erläutert werden.

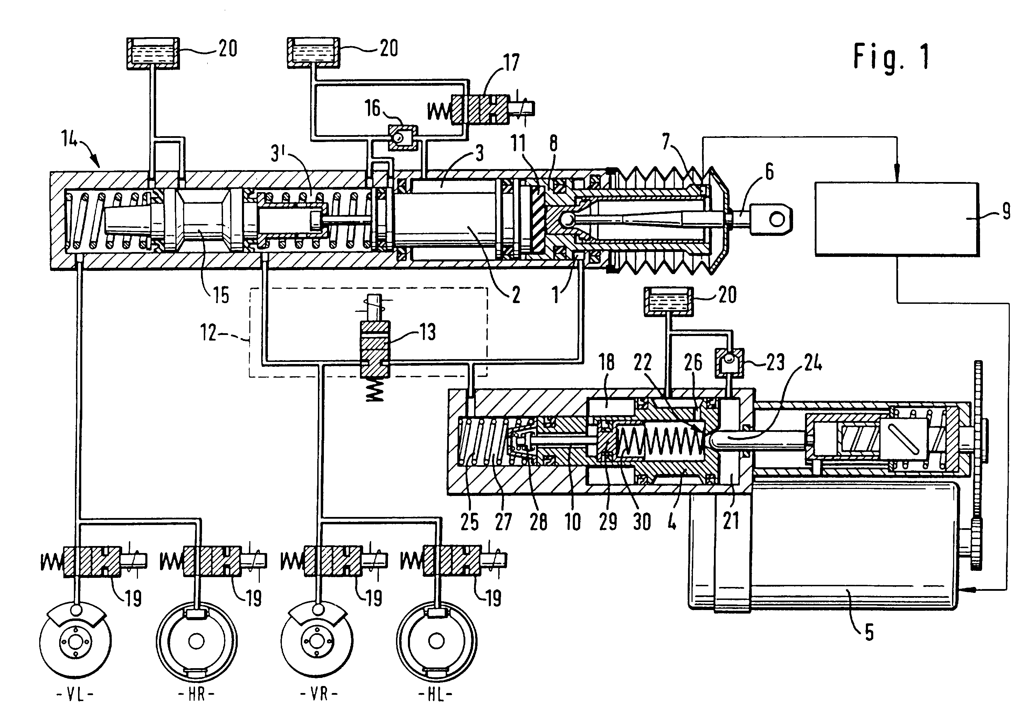

Die Abbildung nach Figur 1 zeigt in baulich vereinfachter Darstellung eine Ausführungsform der Erfindung. Die Bremsanlage ist mit einer Diagonal-Bremskreisaufteilung ausgeführt. Das Gehäuse des Bremsdruckgebers 14 weist zwei Arbeitskolben 2, 15 in Tandemanordnung auf, die mittels einer in einem Verstärkerkolben 8 geführten Druckstange 6 betätigbar sind. Ein erster, am Verstärkerkolben 8 und an der Druckstange 6 anlegbarer Arbeitskolben 2 ist als Stufenkolben mit seinem Schaft innerhalb eines ersten Druckraums des Bremsdruckgebers 14 angeordnet, wobei der erste Druckraum in eine Kammer 3 und in eine den Verstärkerkolben 8 aufnehmende Verstärkerkammer 1 unterteilt ist. Die Verstärkerkammer 1 ist mittels einer Ventil- und dementsprechenden hydraulischen Schaltungsanordnung 12 mit einer weiteren Kammer 3' verbindbar, in der der weitere Arbeitskolben 15 eingesetzt ist. Ferner schließt sich an diese Schaltungsanordnung 12 eine aus einem Stellantrieb 5 und aus einem Füllstufenkolben 4 gebildetete Hilfsdruckquelle an. Die Druckstange 6 ist innerhalb eines hülsenförmigen Kolbenabschnittes des Verstärkerkolbens 8 geführt.

Der Verstärkerkolben 8 weist sowohl am hülsenförmigen Kolbenabschnitt wie auch am vergrößerten Verstärkerkolben eine Abdichtung auf, so daß die Verstärkerkammer 1 leckagefrei gedichtet ist. Über eine zwischen dem Verstärkerkolben 8 und dem Arbeitskolben 2 eingebettete Gummireaktionsscheibe 11 erfolgt die Bremsdruckeinsteuerung im Sinne einer für das manuelle Betätigungsgefühl zweckmäßigen Springercharakteristik. Die Druckstangenbetätigung wird von einer Sensoreinrichtung 7, beispielsweise mittels Hallsensor und Permanentmagnet, durch die elektronische Verarbeitung der Ausgangssignale des Sensors in der Steuer- und Regelelektronik 9 erfaßt, wobei das Erfordernis einer gesonderten Elektronik entfallen kann, wenn die Verarbeitung der Ausgangssignale innerhalb der für den ABS-/ASR-Bremsenbetrieb vorhandenen Steuer- und Regelelektronik 9 geschieht. Der Positionssensor der Sensoreinrichtung 7 befindet sich gemäß Ausführungsbeispiel im Bereich zwischen dem hülsenförmigen Kolbenabschnitt des Verstärkerkolben 8 und der Hülse der Druckstange 6 angeordnet. Das vom Positionssensor erfaßte Bewegungssignal wird durch die peripher angeordnete Steuer- und Regelelektronik 9 ausgewertet, die bei einer Regelabweichung den Füllstufenkolben 4 aktiviert. Im Hinblick auf die Zuverlässigkeit und Sicherheit des Bremssystems sind die Steuer- und Regelelektronik 9 und die Sensoreinrichtung 7 vorzugsweise redundant ausgeführt. Die Elektronik übernimmt nicht nur die Steuerung und Regelung der Bremskraftverstärkerfunktion, sondern kann infolge der vorgeschlagenen hydraulischen Schaltungsanordnung 12 gleichfalls bei Bedarf auch die ABS-/ASR-Funktion bewirken. Als Stellantrieb 5 für den Füllstufenkolben 4 wird stellvertretend für eine Vielzahl von Antriebsmitteln ein als Spindelantrieb ausgeführter elektrischer Rotationsantrieb vorgeschlagen, der zwecks Gewährleistung einer ungehinderten Rückstellbewegung des Füllstufenkolbens 4 nicht selbsthemmend ausgeführt ist. Dieser Stellantrieb 5 zeichnet sich durch einen hohen Wirkungsgrad sowie durch kleine, leichte Bauweise aus. Nach Wunsch oder Bedarf können jedoch alternativ Vakuum-, Druckluft- oder Hydraulikantriebe verwendet werden. Besonders eignen sich pneumatische Linearantriebe mit elektrisch ansteuerbaren Ventilen sowie elektrische Linearantriebe. Um die thermische und elektrische, energetische Beanspruchung des Stellantriebs 5 möglichst gering zu halten, ist eine Blockiereinrichtung zur Aufrechterhaltung einer Haltekraft vorgesehen, wozu sich besonders ein flüssigkeitsgefüllter, absperrbarer Druckraum 21 eignet. Der Druckraum 21 befindet sich unmittelbar hinter dem Füllstufenkolben 4 und ist über ein Rückschlagventil 23 bzw. über ein am Stellantrieb 5 angebrachter und auf den Füllstufenkolben 4 wirksamer Schließkörper 24 mit dem Nachlaufbehälter 20 verbindbar. Der Stellantrieb 5 weist eine Drehrichtungsumkehr auf, um bei Bedarf die Druckmittelverbindung zwischen dem Druckraum 21 und dem Nachlaufbehälter 20 über einen Kanal im Füllstufenkolben 4 herzustellen.

Der Füllstufenkolben 4 begrenzt mit dem kleineren der beiden Kolbenquerschnitte den Modulatorraum 27 innerhalb des Stellzylinders, der über einen Spindelantrieb und ein vorgeschaltetes Untersetzergetriebe mit einem Elektromotor gekoppelt ist. Der größere Kolbenquerschnitt des Füllstufenkolbens 4 nimmt in seinem Innenraum einen mit einer Druckfeder 30 versehenen Steuerkolben 29 auf, der über einen den kleineren Kolbenquerschnitt durchdringenden Ringkanal (10) ein den Druckmitteldurchlaß zwischen dem Modulatorraum 27 und dem Füllstufenraum 18 steuerndes Zentralventil 28 kontaktiert. Der Füllstufenraum 18 ist im Stellzylinder als Ringraum von der Mantelfläche am kleineren Kolbenquerschnitt und der Stirnfläche am größeren Kolbenquerschnitt begrenzt, so daß abhängig von der Hubbewegungsrichtung des Füllstufenkolbens 4 Druckmittel zwischen dem Füllstufenraum 18 und dem Modulatorraum 27 strömen kann. Die im Modulatorraum 27 angeordnete und am kleineren Kolbenquerschnitt der Füllstufenkolbens 4 anliegende Feder 25 sorgt während der Bremsdruckreduzierung und letztlich damit auch in der Bremslösestellung für die Ausführung der Rückstellbewegung des Füllstufenkolben 4 in Richtung auf den den Kanal 26 vom Druckraum 21 trennenden Schließkörper 24, der gemeinsam mit einer Durchgangsbohrung in der Stirnfläche des Füllstufenkolbens 4 das die Druckmittelverbindung zum Nachlaufbehälter 20 mitgestaltende Auslaßventil 22 bildet. Die den Ringkanal 10 sperrende Bewegung des Zentralventils 28 erfolgt abhängig vom Druck im Füllstufenraum 18, sobald das aus dem Füllstufenraum 18 in Richtung des Modulatorraums 27 verdrängte Druckmittelvolumen die, im wesentlichen aus der Kraft der Druckfeder 30 am Steuerkolben 29 gebildete, Rückstellkraft überschreitet. Der Steuerkolben 29 entfernt sich sodann vom Stößel des Zentralventils 28 in Richtung auf die Druckfeder 30, wobei das im Innenraum der größeren Kolbenstufe befindliche Druckmittelvolumen über den Kanal 26 zum Nachlaufbehälter 20 entweichen kann. Sowohl der kleinere Kolbenabschnitt wie auch der größere Kolbenabschnitt der Füllstufe sind in Richtung des Modulatorraums 27 bzw. des Füllstufenraums 18 und des Druckraums 21 mittels Manschettendichtungen flüssigkeitsdicht geführt. Gleichfalls weist der Steuerkolben 29 eine in Richtung des Füllstufenraums 18 wirkende Manschettendichtung auf.

In der vorgeschlagenen Bremsanlage ist der Bremskraftverstärker von der Füllstufe mechanisch entkoppelt, so daß unerwünschte Rückwirkungen auf das Bremspedal unterbleiben. Der Füllstufenkolben stellt bei schneller Bremsbetätigung den Radbremsen ein relativ großes Vorfüllvolumen bereit und sorgt infolge der druckabhängigen Steuerung des Füllstufenraums 18 während der weiteren Bremsbetätigung für einen hohen Bremsdruck bei verkleinertem Volumenstrom. Durch den Stellantrieb 5 wird der Füllstufenkolben 4 in Richtung des Modulatorraums 27 bewegt, wobei zunächst in der ersten Phase bei schneller Bremsbetätigung das Zentralventil 28 geöffnet ist, bis sich ein definierter Druck an der Stirnfläche des Steuerkolbens 29 einstellt, der diesen entgegengesetzt zur Bewegungsrichtung des Füllstufenkolbens 4 bewegt, wodurch das Zentralventil 28 den Ringkanal 10 verschließt und damit während der weiteren Bremsbetätigung sich der gewünschte hohe Druck bei verkleinerter Volumenzufuhr zum Bremsdruckgeber 14 (durch die reduzierte Verdrängerwirkung des kleineren Kolbenquerschnitts am Füllstufenkolben 4) einstellt.

Eine weitere Ausgestaltung des Erfindungsgedankens sieht vor, daß zur Messung der Füllstufenkolben- oder Spindelposition ein Sensor vorgesehen ist. Ferner kann durch Verwendung eines Sensors zur Erfassung des Schwenkwinkels des elektrischen Rotationsmotors aus der Ansteuercharakteristik des Stellantriebs auf den im Bremssystem herrschenden Druck geschlossen werden, was der Bremsdruckregelung förderlich ist. Hierzu würde sich auch ein Sensor zur Erfassung des vom Stellantrieb 5 aufgenommenen elektrischen Stroms eignen.

Nachfolgend wird die Funktionsweise der erfindungsgemäßen Bremsanlage erläutert. Alle in der Figur 1 gezeigten Elemente sind der Bremslösestellung zugeordnet. Die Normalbremsfunktion erfolgt auf an sich bekannte Weise durch manuelle Betätigung der Druckstange 6. Die Bewegung der Druckstange 6 wird durch die Sensoreinrichtung 7 permanent erfaßt und innerhalb der Steuer- und Regelelektronik 9 anhand der Solldaten überwacht. Innerhalb der zulässigen Radschlupfschwelle bleibt das in der hydraulischen Schaltungsanordnung 12 befindliche Sperrventil 13 elektromagnetisch unerregt, wobei der Stellantrieb 5 und der Füllstufenkolben 4 bei einer Regelabweichung von den Solldaten der gewünschten Verstärkercharakteristik aktiviert werden. Bei inaktivem Stellantrieb ist zunächst ein mechanischer Durchtrieb entsprechend einer konventionellen Bremsanlage vorhanden. Infolge der Sensor-Signalauswertung in der Steuer- und Regelelektronik 9 wird nach Bedarf die hydraulische Verstärkerfunktion über die Stellgröße für den Stellantrieb 5 elektrohydraulisch variiert. Diesbezüglich erfüllt dann das vom Füllstufenkolben 4 unmittelbar in die Verstärkerkammer 1 eingespeiste Druckmittelvolumen den gewünschten Verstärkerdruck. Die Minderung des Verstärkerdrucks geschieht durch einen Reversiervorgang des Stellantriebs 5, wodurch der Füllstufenkolben 4 druckentlastet wird. Im konkreten Ausführungsbeispiel geschieht dies durch eine Drehrichtungsumkehr des Spindelmotors, wodurch der am Spindelantrieb als Absperrventil 22 wirksame konische Schließkörper 24 die jeweils im Druckraum 21 wirksame Haltekraft durch Rückströmen von Druckmittel über einen im Füllstufenkolben 4 angebrachten Kanal 26 zum Nachlaufbehälter 20 reduziert. Der Füllstufenkolben 4 kann damit unter Mitwirkung der Feder 25 einen Kolben-Rückhub vollziehen, der zu einer Vergrößerung der Volumenaufnahme im Modulatorraum 27 und Füllstufenraum 18 führt. Das Zentralventil 28 verharrt folglich in der dem Ringkanal 10 freigebenden Schaltstellung.

Sobald die Steuer- und Regelelektronik 9 in der Betriebsbremsstellung mittels weiterer Sensoren zur Erfassung der Raddrehzahlen unzulässig hohe Bremsschlupfwerte erkennt, wird die durch Druckhalte-, Druckabbau- und Druckaufbauphasen gekennzeichnete Bremsdruckmodulation (ABS-Modus) aktiviert. Zum Ausfiltern von Störgrößen und damit zum Erzeugen der Druckhaltefunktion in beiden Bremskreisdiagonalen wird das normalerweise geöffnete und dem Nachlaufbehälter 20 angeschlossene Einlaßventil 17 elektromagnetisch geschlossen, wodurch das in der Kammer 3 eingesperrte Druckmittelvolumen zu einer hydraulischen Verriegelung der Druckstange 6 und damit zu einer Begrenzung der momentan eingesteuerten manuellen Bremskraftbetätigung führt. Währenddessen bleiben von dieser Maßnahme das Sperrventil 13 und der Füllstufenkolben 4 unberührt in der abbildungsgemäßen inaktiven Position.

Zur Einleitung der Druckabbauphase öffnet bei gleichzeitig noch geschlossenem Einlaßventil 17 das Sperrventil 13 die hydraulische Verbindung des normalerweise mit der Kammer 3' in Verbindung stehenden Bremskreises in Richtung zur Verstärkerkammer 1 und zum Füllstufenkolben 4. Durch die Druckentlastung der Kammer 3' wird gleichfalls der Arbeitskolben 15 druckentlastet, so daß auch im angeschlossenen Bremskreis der Druck in Richtung des am Bremsdruckgeber angebrachten Nachlaufbehälters 20 reduziert werden kann. Der hydraulische Druck des weiteren Bremskreises, der an der Schaltungsanordnung 12 unmittelbar angeschlossen ist, entweicht während der Druckabbauphase in den erweiterten Modulatorraum 27, sofern infolge des durch den Stellantrieb 5 eingeleiteten Reversiervorgangs der Schließkörper 24 am Spindelantrieb den Druckmittelrücklauf aus dem Druckraum 21 über den Kanal 26 zum Nachlaufbehälter 20 herstellt. Das im kleineren Kolbenquerschnitt des Füllstufenkolbens 4 geführte Zentralventil 28 befindet sich in Offenstellung, so daß der Modulatorraum 27 über einen Ringkanal 10 mit dem Füllstufenraum 18 verbunden ist. Die Rückstellbewegung des Füllstufenkolbens 4 führt zwangsläufig immer zu einer Vergrößerung des Füllstufenraums 18, wodurch abhängig von der Druckdifferenz an der im Füllstufenkolben 4 geführten und druckbeaufschlagten Fläche am Steuerkolben 29, der Schaltpunkt des Zentralventils 28 druckabhängig festgesetzt ist. Die manuell über die Druckstange 6 auf den Arbeitskolben 2 eingeleitete Betätigungskraft (Fußkraft) ist durch die Sperrstellung des Einlaßventils 17 und damit durch das Absperren der Kammer 3 unwirksam.

Die radindividuelle Regelung des Bremsdruckverlaufs in den Radbremsen VR, VL, HR, HL geschieht mittels elektromagnetisch betätigbaren, stromlos offenen 2/2-Wegeventilen 19. Diese Ventile werden während der Druckhaltephase elektromagnetisch in Sperrstellung geschaltet und befinden sich während der Druckaufbau- und Druckabbauphase in der elektromagnetisch nicht erregten offenen Grundposition. Im ABS-Modus ist der Druckverlauf in den Radbremsen durch die Betriebsweise des Einlaßventils 17 und des Sperrventils 13 sowie von der Aktivierung des Füllstufenkolbens 4 entsprechend beeinflußbar. Hieraus folgt für die Hinterachsbremsen HL, HR, daß in der Druckabbauphase beide Hinterradbremsen durch Schließen des Einlaßventils 17 (Arbeitskolben 2, Verstärkerkolben 1 sind hydraulisch gesperrt), und Öffnen des Sperrventils 13 diese druckentlastet werden, sobald der Füllstufenkolben 4 eine Rückstellbewegung vollzieht. Druckmittel wird unmittelbar aus der Verstärkerkammer 1, der Kammer 3' am angrenzenden Arbeitskolben 15 und aus der Hinterradbremse HR des Druckstangenbremskreises abgesaugt.

Zur Realisierung der Druckaufbauphase in den beiden Hinterradbremsen wird das vom Füllstufenkolben 4 aus dem Modulatorraum 27 verdrängte Druckmittelvolumen über das offene Sperrventil 13 sowohl in den Druckstangenbremskreis wie auch in die zur hydraulischen Betätigung des weiteren Arbeitskolbens 15 notwendige Kammer 3' eingespeist. Mit Beendigung der manuell eingesteuerten Bremsbetätigungsphase kehren sich die Schaltungszustände des Einlaß- und Sperrventils 17, 13 wieder um, so daß diese Ventile wieder in ihre ursprüngliche Grundstellung gelangen.

Aus Sicherheitsgründen ist parallel zum Einlaßventil 17 ein in Richtung der Kammer 3 öffnendes Rückschlagventil 16 angeordnet, um bei einem Verklemmen des Einlaßventils 17 in der Sperrstellung unter allen Umständen eine manuell gesteuerte Druckentlastung der Radbremsen zu ermöglichen.

Die Schaltung der erfindungsgemäßen Bremsanlage nach Figur 1 eignet sich nicht nur zur Realisierung einer kennfeldadaptiven Bremskraftverstärkerfunktion und zum Einsatz als Bremsschlupfregler, sondern auch zur Regelung des Antriebsschlupfes, indem ohne besonderen Aufwand der Bremsbetätigungsdruck in den Radbremsen der angetriebenen Fahrzeugräder durch das elektronische Ansteuern des Stellantriebes 5 bestimmt werden kann, sobald zusätzliche elektromagnetisch betätigbare Sperrventile in den Bremsleitungszweigen der nicht angetriebenen Fahrzeugräder vorgesehen sind, die in Figur 1 nicht explizit dargestellt wurden. Folglich wird im ASR-Modus der Arbeitskolben 2 mit dem Verstärkerkolben 8 durch die Aktivierung des Stellantriebs 5 hydraulisch beaufschlagt. Das Einlaßventil 17 verharrt geöffnet, während das Sperrventil 13 geschlossen bleibt. Druckmittel aus dem Modulatorraum 27 gelangt ausschließlich in die Verstärkerkammer 1, so daß der zur ASR-Regelung erforderliche Druck auf die beiden Arbeitskolben 2, 15 und damit auf die Radbremsen der angetriebenen Fahrzeugräder wirken und einzeln über die 2/2-Wegeventile 19 radindividuell geregelt werden kann, während die Radbremsen der nicht angetriebenen Fahrzeugräder durch vorzugsweise elektromagnetisch betätigbare Wegeventile (Sperrventile) von der Druckregelung getrennt sind.

### Bezugszeichenliste

- 1: Verstärkerkammer
- 2: Arbeitskolben
- 3, 3': Kammer
- 4: Schwimmkolben
- 5: Stellantrieb
- 6: Druckstange
- 7: Sensoreinrichtung
- 8: Verstärkerkolben
- 9: Steuer- und Regelelektronik
- 10: Ringkanal
- 11: Gummireaktionsscheibe
- 12: Schaltungsanordnung
- 13: Auslaßventil
- 14: Bremsdruckgeber
- 15: Arbeitskolben
- 16: Rückschlagventil
- 17: Einlaßventil
- 18: Füllstufenraum
- 19: 2/2-Wegeventil
- 20: Nachlaufbehälter
- 21: Druckraum
- 22: Auslaßventil
- 23: Rückschlagventil
- 24: Schließkörper
- 25: Feder
- 26: Kanal
- 27: Modulatorraum
- 28: Zentralventil
- 29: Steuerkolben
- 30: Druckfeder

## Patentansprüche

1. Hydraulische Bremsanlage mit Schlupfregelung, insbesondere für Kraftfahrzeuge, mit wenigstens einen im Bremsdruckgeber (14) geführten Arbeitskolben (2,15), mit einem Verstärkerkolben (8) eines hydraulischen Bremskraftverstärkers zur Betätigung des Arbeitskolbens (2), mit mindestens einer am Bremsdruckgeber (14) angeschlossenen Radbremse (VL,VR,HL,HR) sowie mit einer am Bremskraftverstärker angeschlossenen, elektrisch ansteuerbaren Hilfsdruckquelle, mit einer Steuer- und Regelelektronik (9) zum Erfassen des Raddrehverhaltens und zur Steuerung des Radbremsdrucks mittels Druckmodulationsventilen (19), wobei eine elektronische Sensoreinrichtung (7) zur Erfassung der Relativbewegung zwischen einer zur manuellen Betätigung der Bremsanlange angeordneten Druckstange (6) und dem Verstärkerkolben (8) vorgesehen ist, durch deren Ausgangssignale die Ansteuerung der Hilfsdruckquelle beeinflußt wird, dadurch **gekennzeichnet**, daß die elektrisch ansteuerbare Hilfdruckquelle aus einem zwei unterschiedlich große Kolbenquerschnitte aufweisenden Füllstufenkolben (4) innerhalb eines Stellzylinders gebildet ist, der von einem elektrisch ansteuerbaren Stellantrieb (5) betätigbar ist.

2. Hydraulische Bremsanlage nach Anspruch 1, dadurch **gekennzeichnet**, daß der kleinere der beiden Kolbenquerschnitte am Füllstufenkolben (4) einen innerhalb des Stellzylinders gelegenen Modulatorraum (27) begrenzt, der über eine hydraulische Schaltungsanordnung (12) mit dem Bremsdruckgeber (14) und den Radbremsen (VL, VR, HL, HR) verbindbar ist.

3. Hydraulische Bremsanlage nach Anspruch 2, dadurch **gekennzeichnet**, daß der größere Kolbenquerschnitt des Füllstufenkolbens (4) einen Füllstufenraum (18) innerhalb des Stellzylinders begrenzt, der über einen Ringkanal (10) im Stellzylinder mit dem Modulatorraum (27) verbindbar ist.

4. Hydraulische Bremsanlage nach Anspruch 3, dadurch **gekennzeichnet**, daß im Füllstufenkolben (4) ein von einer Druckfeder (30) beaufschlagter Steuerkolben (29) eingesetzt ist, der an einem einen Druckmitteldurchlaß im Ringkanal (10) innerhalb des Stellzylinders steuernden Zentralventil (28) anlegbar ist.

5. Hydraulische Bremsanlage nach Anspruch 3, dadurch **gekennzeichnet**, daß auf der dem Füllstufenraum (18) abgewandten Stirnfläche des Füllstufenkolbens (4) eine Blockiereinrichtung mittels eines flüssigkeitsgefüllten, absperrbaren Druckraums (21) gebildet ist.

6. Hydraulische Bremsanlage nach Anspruch 4, dadurch **gekennzeichnet**, daß ein von einem Absperrventil (22) steuerbarer Kanal (26) im Füllstufenkolben (4) eine hydraulische Verbindung zwischen einem Druckraum (21) und einem Nachlaufbehälter (20) herstellt, wobei der Steuerkolben (29) dem Ausgleichsdruck zwischen dem Druckraum (21) und dem Nachlaufbehälter (20) sowie der permanent wirksamen Druckfeder (30) ausgesetzt ist.

7. Hydraulische Bremsanlage nach Anspruch 6, dadurch **gekennzeichnet**, daß im Modulatorraum (27) eine weitere Feder (25) vorhanden ist, und daß die Stellkraft der Druckfeder (30) kleiner ist, als die Stellkraft dieser weiteren Feder (25).

8. Hydraulische Bremsanlage mit Schlupfregelung, insbesondere für Kraftfahrzeuge mit wenigstens einen im Bremsdruckgeber (14) geführten Arbeitskolben (2,15), mit einem Verstärkerkolben (8) eines hydraulischen Bremskraftverstärkers zur Betätigung des Arbeitskolbens (2), mit mindestens einer am Bremsdruckgeber (14) angeschlossenen Radbremse (VL,VR,HL,HR) sowie mit einer am Bremskraftverstärker angeschlossenen, elektrisch ansteuerbaren Hilfsdruckquelle, mit einer Steuer- und Regelelektronik (9) zum Erfassen des Raddrehverhaltens und zur Steuerung des Radbremsdrucks mittels Druckmodulationsventilen (19), wobei eine elektronische Sensoreinrichtung (7) zur Erfassung der Relativbewegung zwischen einer zur manuellen Betätigung der Bremsanlage angeordneten Druckstange und dem Verstärkerkolben (8) vorgesehen ist, durch deren Ausgangssignale die Ansteuerung der Hilfsdruckquelle beeinflußt wird, dadurch **gekennzeichnet**, daß die elektrisch ansteuerbare Hilfsdruckquelle einen als Stellantrieb (5) wirksamen Reluktanzmotor aufweist, der abhängig von der Ansteuerung durch die Steuer- und Regelelektronik (9) zwei unterschiedlich steile stationäre Drehzahl-Drehmoment-Kennlinien aufweist.

## Claims

1. A hydraulic braking system with slip control, in particular, for automotive vehicles, comprising at least one working piston (2,15) guided within the brake pressure generator (14), a booster piston (8) of a hydraulic brake force booster for actuating the working piston (2), at least one wheel brake(VL,VR,HL,HR) connected to the brake pressure generator (14), and an electrically actuatable auxiliary pressure source connected to the brake force booster, a control and regulating electronic unit (9) for detecting the wheel rotating pattern and for controlling the wheel brake pressure by means of pressure modulating valves (19), wherein an electronic sensor means (7) is provided for detecting the relative movement between a push rod (6), arranged for the manual operation of the brake system, and the booster piston (8), the output signals of the sensor means influencing the operation of the auxiliary pressure source,
characterized in that the electrically operable auxiliary pressure source includes a quick-fill piston (4) having two differently sized piston cross-sections inside a servo cylinder which can be operated by an electrically drivable servo drive (5).

2. A hydraulic braking system as claimed in claim 1,
characterized in that the smaller one of the two cross-sections of the quick-fill piston (4) confines a modulator chamber (27) within the servo cylinder which is connectable to the brake pressure generator (14) and the wheel brakes (VL, VR, HL, HR) by way of a hydraulic switching arrangement (12).

3. A hydraulic braking system as claimed in claim 2,
characterized in that the large cross-section of the quick-fill piston (4) confines a quick-fill chamber (18) inside the servo cylinder which is connectable to the modulator chamber (27) by way of an annular duct (10) in the servo cylinder.

4. A hydraulic braking system as claimed in claim 3,
characterized in that the quick-fill piston (4) houses a control piston (29) which is acted upon by a compression spring (30) and is movable into abutment on a central valve (28) that controls the pressure fluid passage in the annular duct (10) in the servo cylinder.

5. A hydraulic braking system as claimed in claim 3,
characterized in that a fluid-filled closable pressure chamber (21) forms a locking means on the end surface of the quick-fill piston (4) remote from the quick-fill chamber (18).

6. A hydraulic braking system as claimed in claim 4,
characterized in that a passageway (26) in the quick-fill piston (4), that is controllable by a shut-off valve (22), establishes a hydraulic connection between the pressure chamber (21) and an intake reservoir (20), and the control piston (29) is exposed to the balancing pressure between the pressure chamber (21) and the intake reservoir (20) and a permanently acting compression spring (30).

7. A hydraulic braking system as claimed in claim 6,
characterized in that another spring (25) is provided in the modulator chamber (27), and in that the controlling force of the compression spring (30) is smaller than the controlling force of the further spring (25).

8. A hydraulic braking system with slip control, in particular, for automotive vehicles, comprising at least one working piston (2,15) guided within the brake pressure generator (14), a booster piston (8) of a hydraulic brake force booster for actuating the working piston (2), at least one wheel brake (VL,VR,HL,HR) connected to the brake pressure generator (14), and an electrically actuatable auxiliary pressure source connected to the brake force booster, a control and regulating electronic unit (9) for detecting the wheel rotating pattern and for controlling the wheel brake pressure by means of pressure modulating valves (19), wherein an electronic sensor means (7) is provided for detecting the relative movement between a push rod (6), arranged for the manual operation of the brake system, and the booster piston (8), the output signals of the sensor means influencing the operation of the auxiliary pressure source,
characterized in that the electrically operable auxiliary pressure source includes a reluctance motor acting as a servo drive (5) and having two differently steep stationary rotational speed/torque characteristic curves as a function of the actuation by the controlling and regulating electronic unit (9).

## Revendications

1. Système de freinage hydraulique à régulation du glissement, notamment pour véhicule automobile, comportant au moins un piston de travail (2, 15), guidé dans le générateur de pression de frein (14), un piston d'amplificateur (8) d'un amplificateur hydraulique d'effort de freinage, servant à l'actionnement du piston de travail (2), au moins un frein de roue (VL, VR, HL, HR), raccordé au générateur de pression de frein (14), une source de pression auxiliaire, raccordée à l'amplificateur d'effort de freinage et pouvant être commandée électriquement, et un circuit électronique de commande et de régulation (9) servant à détecter le comportement de rotation de roue et à commander la pression de frein de roue au moyen de valves de modulation de pression (19), tandis qu'il est prévu un dispositif capteur électronique (7) qui sert à détecter le déplacement relatif entre une tige de pression (6), disposée pour l'actionnement manuel du système de freinage, et le piston amplificateur (8) et dont les signaux de sortie influent sur la commande de la source de pression auxiliaire, caractérisé en ce que la source de pression auxiliaire pouvant être commandée électriquement est formée d'un piston d'étage de remplissage (4), comportant deux sections de piston de grandeurs différentes, qui est situé à l'intérieur d'un cylindre de réglage et qui peut être actionné par un dispositif moteur de réglage (5) pouvant être commandé électriquement.

2. Système de freinage hydraulique suivant la revendication 1, caractérisé en ce que la plus petite des deux sections de piston prévues sur le piston d'étage de remplissage (4) délimitent une chambre de modulateur (27) qui est ménagée dans le cylindre de réglage et qui peut communiquer avec le générateur de pression de frein (14) et les freins de roue (VL, VR, HL, HR) par l'intermédiaire d'un agencement de commutation hydraulique (12).

3. Système de freinage hydraulique suivant la revendication 2, caractérisé en ce que la plus grande section du piston d'étage de remplissage (4) délimite à l'intérieur du cylindre de réglage une chambre d'étage de remplissage (18) qui peut être reliée à la chambre de modulateur (27) par un conduit annulaire (10) ménagé dans le cylindre de réglage.

4. Système de freinage hydraulique suivant la revendication 3, caractérisé en ce qu'un piston de commande (29) soumis à l'action d'un ressort de compression (30) est monté dans le piston d'étage de remplissage (4), ce piston de commande pouvant être appliqué sur une valve centrale (28) commandant un passage d'agent de pression dans le conduit annulaire (10) à l'intérieur du cylindre de réglage.

5. Système de freinage hydraulique suivant la revendication 3, caractérisé en ce que, sur la surface frontale du piston d'étage de remplissage (4) située à l'opposé de la chambre d'étage de remplissage (18), un dispositif de blocage est formé au moyen d'une chambre de pression (21) remplie de liquide et pouvant être obturée.

6. Système de freinage hydraulique suivant la revendication 4, caractérisé en ce qu'un conduit (26), pouvant être commandé par une valve de blocage (22), produit dans le piston d'étage de remplissage (4) une liaison hydraulique entre une chambre de pression (21) et un réservoir de compensation (20), le piston de commande (29) étant soumis à la pression de compensation entre la chambre de pression (21) et le réservoir de compensation (20), ainsi qu'au ressort de compression (30) agissant de manière permanente.

7. Système de freinage hydraulique suivant la revendication 6, caractérisé en ce qu'un autre ressort (25) est prévu dans la chambre de modulateur (27) et en ce que la force de réglage du ressort de compression (30) est inférieure à la force de réglage de cet autre ressort (25).

8. Système de freinage hydraulique à régulation du glissement, notamment pour véhicule automobile, comportant au moins un piston de travail (2, 15), guidé dans le générateur de pression de frein (14), un piston d'amplificateur (8) d'un amplificateur hydraulique d'effort de freinage, servant à l'actionnement du piston de travail (2), au moins un frein de roue (VL, VR, HL, HR), raccordé au générateur de pression de frein (14), une source de pression auxiliaire, raccordée à l'amplificateur d'effort de freinage et pouvant être commandée électriquement, et un circuit électronique de commande et de régulation (9) servant à détecter le comportement de rotation de roue et à commander la pression de frein de roue au moyen de valves de modulation de pression (19), tandis qu'il est prévu un dispositif capteur électronique (7) qui sert à détecter le déplacement relatif entre une tige de pression (6), disposée pour l'actionnement manuel du système de freinage, et le piston amplificateur (8) et dont les signaux de sortie influent sur la commande de la source de pression auxiliaire, caractérisé en ce que la source de pression auxiliaire pouvant être commandée électriquement comprend un moteur à réluctance, agissant en tant que dispositif moteur de réglage (5), qui, suivant la commande par le circuit électronique de commande et de régulation (9), comporte deux caractéristiques vitesse de rotation - couple fixes à pentes différentes.
